Europäisches Patentamt

European Patent Office

Office européen des brevets

(11) Publication number : **0 510 972 A2**

# (12) EUROPEAN PATENT APPLICATION

(21) Application number : **92303660.2**

(22) Date of filing : **23.04.92**

(51) Int. Cl.⁵ : **H04N 7/13**

(30) Priority : **25.04.91 JP 95807/91**
**17.06.91 JP 144445/91**

(43) Date of publication of application :
**28.10.92 Bulletin 92/44**

(84) Designated Contracting States :
**DE FR GB IT NL**

(71) Applicant : **MATSUSHITA ELECTRIC**
**INDUSTRIAL CO., LTD.**
**1006, Kadoma**
**Kadoma-shi, Osaka-fu 571 (JP)**

(72) Inventor : **Takahashi, Toshiya**
**1-5-107, Akeno-cho**
**Takatsuki-shi, Osaka-fu 569 (JP)**

(74) Representative : **Crawford, Andrew Birkby et al**
**A.A. THORNTON & CO. Northumberland**
**House 303-306 High Holborn**
**London WC1V 7LE (GB)**

(54) **Image coding method and apparatus.**

(57) An inter-field motion vector of an interlace scanned inputted image is detected, and, using the detected inter-field motion vector, movements between fields are compensated to constitute a frame, which is then subjected to block coding. Alternatively, an interlace scanned input image is subjected to two-dimensional block division and further an activity of each two-dimensional block is calculated, and, using the activity as an index, the two-dimensional block is divided into either field small blocks constituted by field data or frame small blocks constituted by frame data, and the divided small blocks are coded. By these steps, even the image having a large motion does not invite degradation of image quality, and high efficiency image coding can be realized.

Fig. 1

EP 0 510 972 A2

## BACKGROUND OF THE INVENTION:

### 1. Field of the Invention:

The present invention relates to an image coding method and apparatus to be used in transmitting and recording the digital image.

### 2. Description of Prior Art:

The transfer rate of the digital images reaches several hundred Mbps to several Gbps, and there arise restrictions such as of communication cost in transmitting and that of recording capacity in recording, and so on. Accordingly, hitherto there have been developed the image coding method and apparatus designed to restrict the degradation of the image quality to the minimum extent and lower the transfer rate.

Hereinafter there will be described the image coding method of CCIR H.261 specification which is an example of the conventional image coding methods as mentioned above.

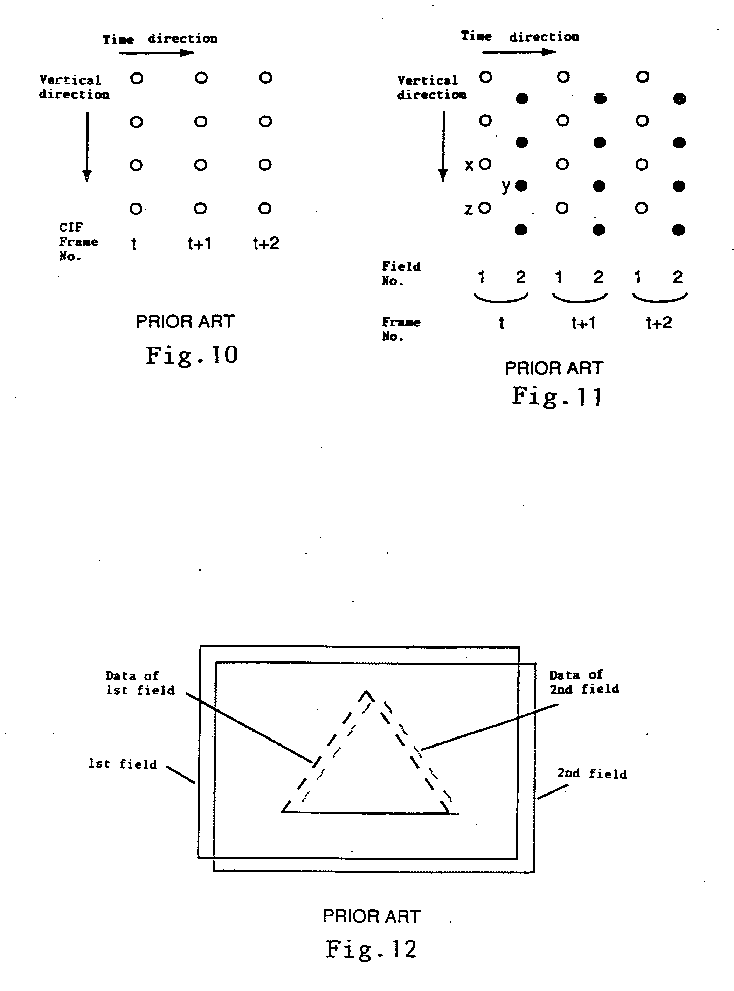

The objective input is a non-interlace image which is called a CIF format. Fig. 10 shows a time-space diagram of the pixels of the input image. In the diagram, the abscissa shows the direction of time and the ordinate shows the vertical direction, i.e. line direction. In the said diagram, gathering of the pixels having the equal time axes is called a CIF frame, and the coding is carried out in the unit of CIF frame.

The initial CIF frame in coding, i.e. the image of frame t, is subjected to intra-frame coding. That is to say, the image data is first divided into two dimensional blocks of 8 x 8 pixels and converted to transform coefficients in the unit of the abovementioned two dimensional blocks by DCT (Discrete Cosine Transform). Next, the transform coefficients are quantized and sent out to the transmission line. In general, since the images have high correlations, and when they are subjected to DCT, the energy of the images subjected to DCT is concentrated on the transform coefficients corresponding to the low frequency components. Accordingly, by carrying out quantizing in such manner as to make the visually less remarkable high frequency components rough and the low frequency components which are the important components fine, it becomes possible to limit the degradation of image quality to a minimum extent and reduce the data amount (cf. CCITT Recommendation H.261, "Codec for audiovisual services at px64 kbit/s", Geneva, 1990).

However, the abovementioned image coding method cannot efficiently code the interlace scanned image inputs. At present, the generally used images are interlace scanned. Fig. 11 is a time-space diagram of the pixels of the interlaced images. The pixels are arranged by interlacing to the time-deviated positions every vertical line. In the said figure, in general gathering of the pixels having equal time axes is called a field, and a combination of the two fields having different time axes a frame. A frame is constituted by a field 1 and a field 2. To the input of Fig. 11, the conventional image coding method is applicable in the unit of a field, but in such case the correlations between fields, i.e. the vertical correlations, cannot be utilized, so that the coding efficiency is low. The field 1 and the field 2 have the different time-space positions, but in general have high correlations. For example, in the still image, the image does not change against the different times. When the points x, y, and z in Fig. 11 are assumed, the correlation between the points x and y is higher than that between the points x and z. Therefore, next there is considered to combine the field 1 with the field 2 to make a frame, and to carry out coding in the unit of the combined frame. Fig. 12 is an example of having formed a frame by combining the fields, being expressed as vertical and horizontal two dimensional plane. In the said figure, a triangle is panned from left to right. The frame formed by simply combining the fields has problematic points such that, in the case of the images having large movements, as in the hypotenuse of the triangle in said figure, there arises a part which shows degradation of correlations in the vertical direction, thereby providing a cause for the degradation of the image quality in coding.

## SUMMARY OF THE INVENTION:

An object of the present invention is to provide an image coding method and apparatus having high efficiency irrespective of the size of motion.

In order to attain the above object, according to an image coding method of the present invention, an interlace scanned image data is inputted, an inter-field motion vector of the foregoing image data is detected, an inter-field motion compensation is carried out by using the inter-field motion vector to construct a motion compensated frame, and the motion compensated frame is subjected to block coding.

Alternatively, an interlace scanned image data is inputted, said image data is divided into two-dimensional blocks, an activity of each of said two-dimensional blocks is calculated, and, using said activity as an index, said two-dimensional blocks are divided into either one of field small blocks constituted by field data or frame small blocks constituted by frame data, and the divided small blocks are coded.

By the method as described above, inter-field motion compensation is carried out to enhance the vertical correlation, after which coding is carried out on a frame by frame basis. Accordingly, even if there is a motion between fields, efficient coding is possible. Further, in a part having a large motion, coding of field small block is carried out, and in a motionless part, coding of frame small block utilizing the vertical correlation is carried out. Accordingly, highly efficient image coding corresponding to a local motion can be realized.

BRIEF DESCRIPTION OF THE DRAWINGS:

Fig. 1 is a block diagram of the image coding apparatus in the first embodiment of the present invention;

Fig. 2 is an illustration of the inter-field motion compensation in the first embodiment of the present invention;

Fig. 3 is a detailed block diagram of the motion detection circuit and inter-field motion compensation circuit of the present invention;

Fig. 4 is a block diagram of the image coding apparatus in the second embodiment of the present invention;

Fig. 5 is a block diagram of the image coding apparatus in the third embodiment of the present invention;

Fig. 6 is an explanatory view of the constituting method for the field and frame small block of the present invention;

Figs. 7 and 8 are the detailed construction views of the circuits for forming field and frame small block of the present invention;

Fig. 9 is a block diagram of the image coding apparatus in the fourth embodiment of the present invention; and

Figs. 10, 11 and 12 are the explanatory views of conventional image coding method.

DESCRIPTION OF THE PREFERRED EMBODIMENTS:

Hereinafter, the image coding method and apparatus in an embodiment of the present invention will be described with reference to the drawings.

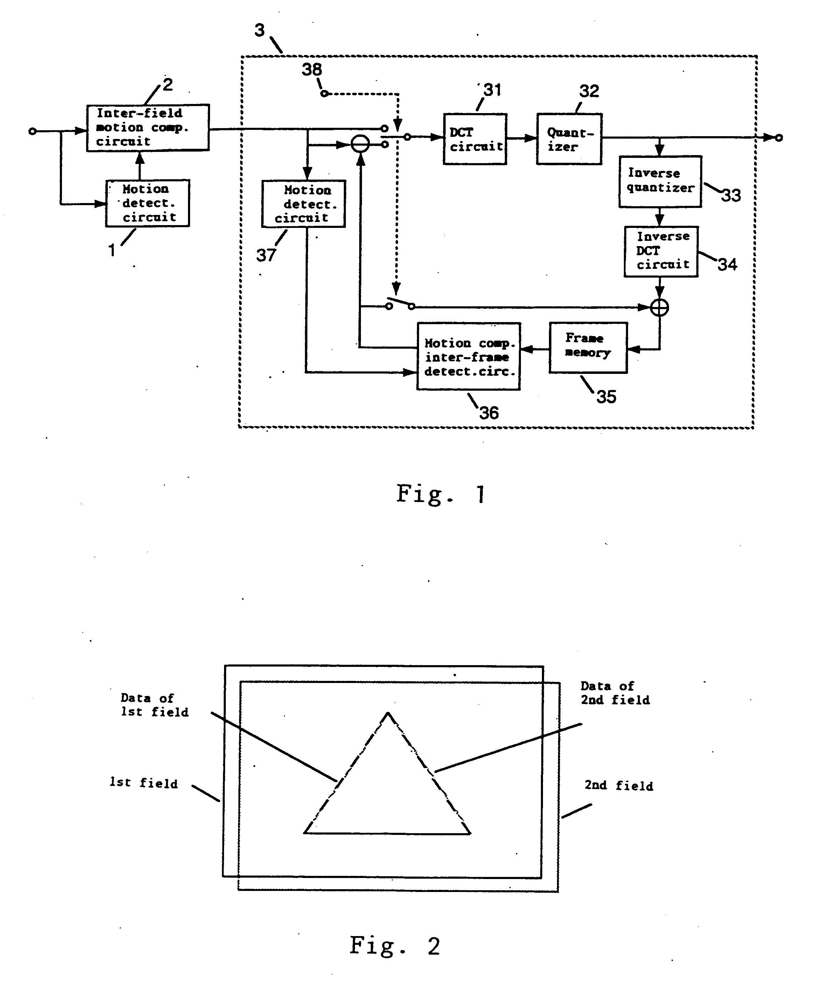

In Fig. 1, the numeral 1 denotes a motion detection circuit, 2 an inter-field motion compensation circuit, and 3 a block coding circuit.

With respect to the image coding apparatus constituted as above, explanation will be given below by using Fig. 1 and Fig. 2.

For the inputted image, inter-field motion vectors are obtained in the unit of block in the motion detection circuit 1 by a block matching method. Next, the obtained motion vectors of the blocks are averaged by all blocks in the field, and the average value is taken as the inter-field motion vector. The inter-field motion compensation circuit 2 carries out the inter-field motion compensation by using the above inter-field motion vector to make a motion compensated frame. Fig. 2 is an example of the motion compensated frame, in which the motion of the object between fields is compensated to constitute a highly vertically correlated frame. The block coding circuit 3 subjects the said motion compensated frame to block coding in the unit of a frame. In Fig. 1, there is used as a block coding circuit an inter-frame differential two-dimensional DCT coding apparatus similar to that of the conventional example.

The block coding circuit 3 comprises a DCT circuit 31, a quantizer 32, an inverse quantizer 33, an inverse DCT circuit 34, a frame memory 35, a motion compensation inter-frame prediction circuit 36, a motion detection circuit 37, and an intra-frame/inter-frame switching signal input terminal 38.

The initial motion compensated frame in coding (a frame inputted to the time t, being called a t-frame) transforms into a transform coefficient in DCT circuit 31 in a certain block unit, quantizes the transform coefficient with a quantizer 32 and sends it out to the transmission line. The transform coefficient sent out to the transmission line is simultaneously reverted to the real time data through an inverse quantizer 33 and an inverse DCT conversion circuit 34 and stored in the frame memory 35.

On the other hand, the images lying in the frames in and after t + 1 frame are subjected to inter-frame differential coding. First, in the motion detection circuit 37, using for example a well known full search method, an inter-frame motion vector is obtained in the unit of a block. The motion compensation inter-frame prediction circuit 36 forms the motion compensated prediction of the next frame in the unit of a block by using the above detected motion vector. The t + 1 frame image calculates the difference from the prediction formed from the t-frame, i.e. prediction error, and thereafter codes it by frame in the same method as applied to t-frame. In the zones in and after t + 2 frame, prediction errors are coded in the same method as in t + 1 frame.

The abovementioned operations are all the processings in the unit of a frame. Compared with the processings in the unit of a field, in the processing in the unit of a motion compensated frame, the inter-pixel distance in the vertical direction becomes 1/2, and so the correlations become higher and the energy of the transformed coefficients concentrate on lower frequency region. As a result, there can be obtained a high efficiency coding apparatus. Further, as the inter-field motion compensation is carried out, coding efficiency is not lost even against the images having large motion.

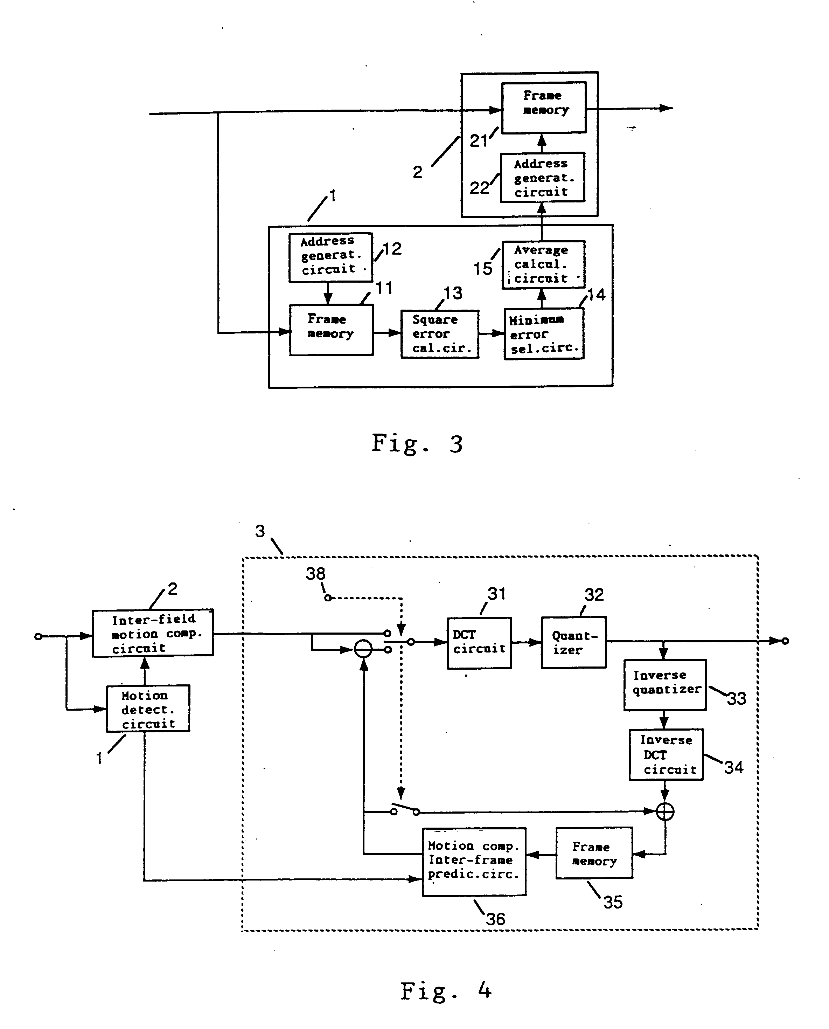

Fig. 3 is an example of the detailed constitution of the abovementioned motion detection circuit 1 and inter-field motion compensation circuit 2. The motion detection circuit 1 is constituted by a frame memory 11 for memorizing the inputted image and an address generating circuit 12 for generating said address, a square error calculation circuit 13 for calculating the square errors between the blocks of the different fields, a minimum error selection circuit 14 for outputting as the motion vector the block address in the block having the smallest error out of the square errors calculated by the above square error calculation circuit, and an average value calculation circuit 15 which inputs the motion vector of each block generated in the foregoing minimum error differential selection circuit 14, averages the motion vectors of full blocks in the field and outputs the inter-field motion vectors. Further, the motion compensation circuit 2 is constituted by a frame memory 21 and an address generating circuit 22. The inter-field motion compensation is realized by inputting the motion vector produced by the motion detection circuit 1 to the address generating circuit 22 as an offset, and shifting the whole of the field 2, in reading out the image memorized in the frame memory 21.

Fig. 4 is a block diagram of the image coding apparatus in the second embodiment of the present invention. The difference of this embodiment from the first embodiment is in the point of the co-use of the motion detection circuit 1 with the motion detection circuit 57 in the block coding circuit 3. In the second embodiment, the inter-frame motion is to be detected by the motion detection circuit 1. The inter-field motion vector is obtained by averaging the motion vectors detected inter-frame by block in the whole intra-frame blocks and dividing the average value thereof into 1/2. By constituting as above, approximately the same effect as that of the first embodiment can be obtained with less hardware without the necessity to provide the different circuits for inter-field and inter-frame, though precision is slightly inferior to the case of obtaining the inter-field motion vector.

The above embodiment has been explained taking an example of the inter-frame differential two-dimensional DCT coding method as a block coding, but the block coding is not limited to the embodiment but a block coding can be used for any system such as three-dimensional DCT, vector qantization, and the like.

Although, in the foregoing embodiment, it was arranged to obtain the inter-field motion vector by averaging the motion vectors of the whole blocks in the field or frame, the system is not limited to said embodiment but various methods can be utilized such as to take not the average but the mean value, to calculate the histogram of the motion vectors in the whole blocks and take an average by using only several factors having high frequency, or to detect only one interfield motion vector from the start by deeming a field or a frame as one block, and the like.

Hereinafter, the image coding method and apparatus in the third embodiment of the present invention will be described with reference to the drawings.

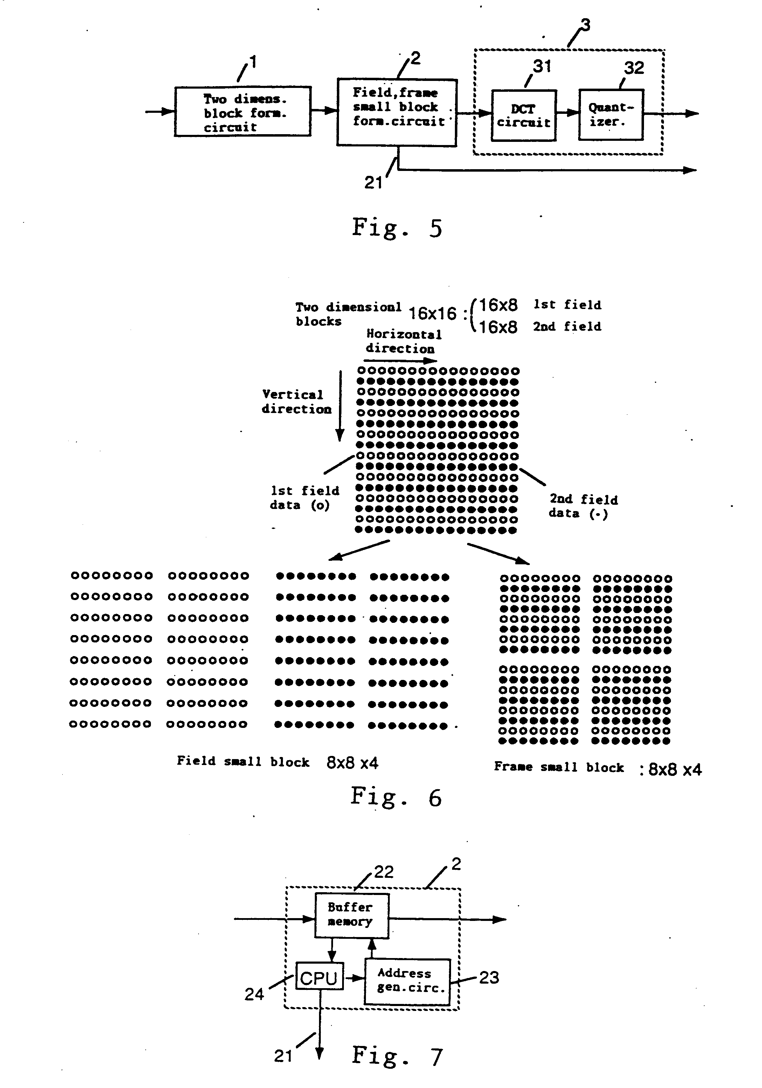

In Fig. 5, the numeral 1 denotes a two-dimensional block forming circuit, 2 a field, frame small block forming circuit, and 3 a block coding circuit which is constituted by a DCT circuit 31 and a quantizer 32.

With respect to the image coding apparatus constituted as above, explanation will be given below by using Figs. 5, 6, 7 and 8.

The inputted image is divided into two-dimensional blocks of certain size in the two-dimensional block forming circuit 1. Here, there is assumed as an example a two-dimensional block having 16 (horizontal) X 16 (vertical) pixels. The field, frame small block forming circuit 2 inputs the above 16 X 16 two-dimensional blocks, and first divides them into 4 X 8 X 8 field or frame small blocks. Fig. 6 is an example of division. The 16 X 16 two-dimensional blocks comprise 16 X 8 first field two-dimensional blocks and 16 X 8 second field two-dimensional blocks, The field small block comprises the 8 X 8 pixels X 2 small blocks constituted only by the data of the first field, and 8 X 8 pixels x2 small blocks constituted only by the data of the second field, or 4 small blocks in total. On the other hand, the frame small block comprises four 8 X 8 small blocks formed by combining the data of the first field and second field alternately by 1 line, respectively.

Next, the field, frame small block forming circuit 2 outputs by selecting either one of the field small block or frame small block with an index of activity. The activity is calculated in the following manner. Now, assume the image data of the field small block to be Sbi(x,y,n) (x: horizontal pixel address, $1 \leqq x \leqq 8$, y: vertical pixel address, $1 \leqq y \leqq 8$, n: small block address $1 \leqq n \leqq 4$). First, an average value mi(n) of each small block is obtained. Next, using an average value mi(n), an AC energy of each small block is obtained, and the total of the AC energy in each small block is calculated. Ei can be expressed by equation, as follows:

(原文 7頁の式)

The sum of the AC energy of the frame small block is also calculated by the similar method, and the difference between Ei and Er (Ei - Er) as obtained above is taken as activity. Next, the said actiity (Ei - Er) is compared with the experimentally determined constant a, and if (Ei - Er) < α, a field small block is selected, and if (Ei - Er) $\geqq$ α. a frame small block is selected, and then outputted. The constant α may be simply 0. At the same time, the field, frame small block forming circuit 2 outputs also the field, frame selection signal 21 which shows which of the field or frame small block, has been selected. The field, frame selection signal 21 is sent to the decoder together with the output of the block coding circuit 3.

The field or frame small block is then coded in the block coding circuit 3 and sent to the transmission line. Here, there are used a DCT circuit 31 and a quantizer 32 as block coding circuit 3.

According to the above device, in the block of large motion, due to large inter-field differential, the activity becomes (Ei - Er) < α, in which a field small block is selected. Accordingly, coding can be carried out without suppressing the motion. In the block in which there is scarce motion, reversely the inter-field differential is small, and the activity becomes (Ei - Er) > α, in which a frame small block is selected, and coding can be carried out utilizing the vertical correlation. In other words, it becomes possible to carry out optimum coding according to the local motion of image, and there can be realized coding in high efficiency without depending on the motion.

Fig. 7 is an example of the detailed constitutional view of the abovementioned field, frame small block forming circuit 2. In this example, the field, frame small block forming circuit 2 is constituted by a buffer memory 22 for inputting the two-dimensional block and outputting the field or frame small block, an address generating circuit 23 for generating the address of the buffer memory, and a CPU 24 for calculating the activity, selecting either one of the field or frame small block, and controlling the address generating circuit and buffer memory. The CPU 24 also outputs a field, frame selection signal 21 which shows which of the field or frame small block has been selected.

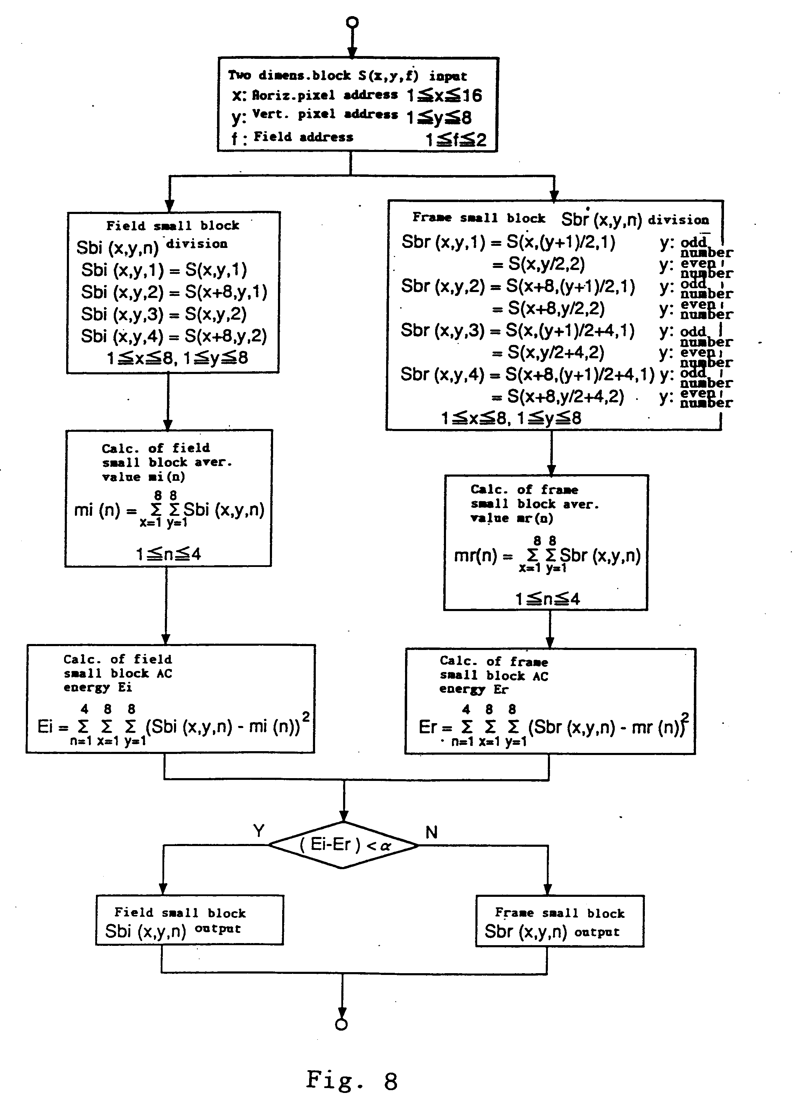

Fig. 8 is a flow chart to show an example of algorism of CPU 24. The said figure shows an example of the case where the motion of the third embodiment is carried out.

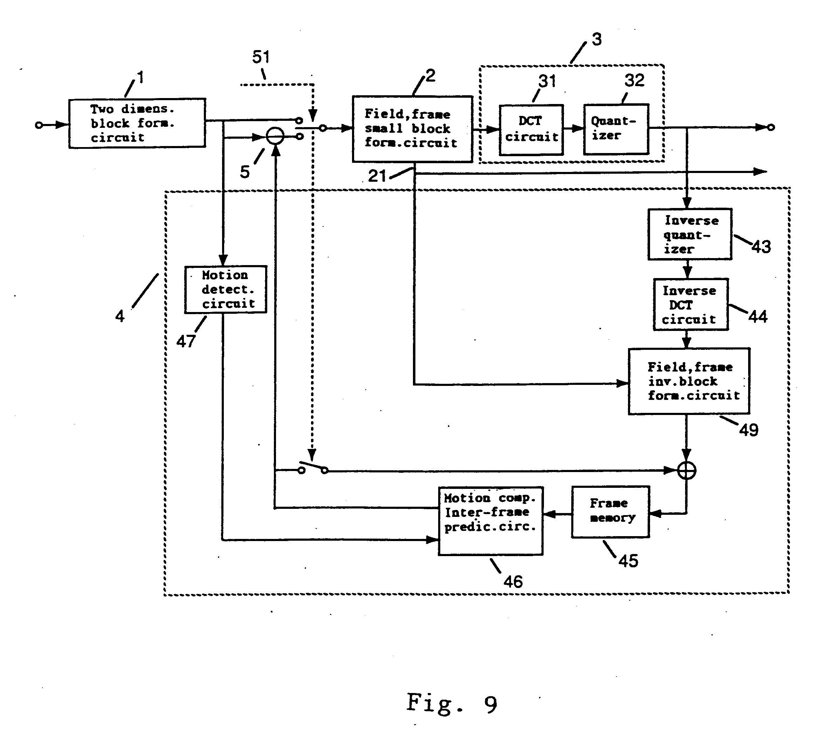

Fig. 9 is a block diagram of the image coding apparatus in the fourth embodiment of the present invention, in which the two-dimensional block forming circuit 1, field, frame small block forming circuit 2, and block coding circuit 3 are the same as those of the first embodiment, to which there are further added the prediction circuit 4 and the subtractor 5.

With respect to the image coding apparatus constituted as above, explanation will be given below by using Fig. 9.

The inputted image is first divided into the two-dimensional blocks by the two dimensional block forming circuit 2, in the same manner as in the third embodiment. The initial coding frame is switched to the intra-frame coding by the input of the intra-frame and inter-frame switching signal 51. The method of intra-frame coding is similar to that of the third embodiment. The difference from the third embodiment is in the point of coding the prediction errors. That is to say, for the second frame and succeeding frames, the difference from the prediction value outputted in the prediction circuit 4 is calculated with the subtractor 5 in the unit of two dimensional block. Next, the prediction error obtained as a result of the calculation is divided into either a field or a frame small block, and then subjected to coding. The method of coding the prediction error is the same as that of the intra-frame coding, i.e. that of the third embodiment. In the prediction circuit 4, using the inverse quantizer 43, inverse DCT circuit 44, frame memory 45, motion compensation inter-frame prediction circuit 46 and motion detection circuit 47, the prediction value is calculated in the same method as that of the first embodiment. In the present embodiment, due to the division into either the field or the frame small block, the field, frame inverse block forming circuit 49 for further reverting the above small block to the two-dimensional block is inserted next to the inverse DCT circuit 44.

By constituting the image coding apparatus as above, there can be obtained the effect similar to that of the third embodiment not only to the intra-frame coding but also to the inter-frame coding.

In the foregoing embodiments, explanation was given by taking a DCT circuit as an example of the block coding circuit 3. However, the invention is not limited to it but any other system using the two-dimensional block may be employed such as orthogonal transforms including Hadamard transformation, Fourie transformation, vector quantization, etc.

Further, while the first, second, third and fourth embodiments were severally explained, the invention can be realized by combining the first and the third, fourth, or the 2nd and the third, fourth, in which case a further highly efficient coding can be realized.

## Claims

1. An image coding method which comprises the steps of:

   inputting an interlace scanned image data;

   detecting an inter-field motion vector of said image data;

   carrying out an inter-field motion compensation by using said inter-field motion vector to constitute a motion compensated frame; and

   block coding said motion compensated frame.

2. An image coding method according to Claim 1, wherein said inter-field motion vector is obtained by detecting N (N: an integer of $N \geqq 1$) motion vectors between fields, and calculating from said detected N motion vectors.

3. An image coding method according to Claim 1, wherein said inter-field motion vector is obtained by detecting N (N: an integer of $N \geqq 1$) motion vectors between frames, and calculating from said detected N motion vectors.

4. An image coding apparatus comprising:

   a motion detection circuit for inputting interlace scanned image data to detect an inter-field motion vector of said image data;

   a motion compensation circuit for carrying out inter-field motion compensation by using said detected inter-field motion vector to constitute a motion compensated frame; and

a block coding circuit for block coding said motion compensated frame.

5. An image coding method which comprises the steps of:

inputting an interlace scanned image data;

dividing said image data into two dimensional blocks;

calculating an activity of said two-dimensional blocks;

dividing said two dimensional blocks into either field small blocks constituted by field data or frame small blocks constituted by frame data by using said activity as an index; and

coding said divided small blocks.

6. An image coding method which comprises the steps of:

inputting an interlace scanned image data;

dividing said image data into two-dimensional blocks;

obtaining a difference between said two-dimensional block and a prediction value of said two-dimensional block to make a prediction error two-dimensional block;

calculating an activity of said prediction error two-dimensional block;

dividing said prediction error two-dimensional block into either field small blocks constituted by field data or frame small blocks constituted by frame data; and

coding the said divided small blocks.

7. An image coding method according to Claim 5 or 6, wherein said activity is made into a difference (Ei - Er) between a total Ei of field small block AC energy constituted by said two-dimensional intra-block field data and a total Er of frame small block AC energy constituted by said two-dimensional intra-block frame data, and

said two dimensional block is divided into a field small block when said activity (Ei - Er) is smaller than a constant $\alpha$, and into a frame small block when the same is larger than the constant $\alpha$.

8. An image coding apparatus comprising:

a two-dimensional block forming circuit for inputting an interlace scanned image data, and for dividing said image data into two-dimensional blocks;

a small block forming circuit for calculating an activity of said two-dimensional blocks, and for using said activity as an index, dividing said two-dimensional block into either field small blocks constituted by field data or frame small blocks constituted by frame data; and

a block coding circuit for coding the divided small blocks.

9. An image coding apparatus comprising:

a two dimensional block forming circuit for inputting an interlace scanned image data, and for dividing said image data into two-dimensional blocks;

a two-dimensional block forming circuit for dividing said image data into two-dimensional blocks;

a prediction circuit for generating a prediction value of said two-dimensional block;

a subtractor for calculating a difference between said two-dimensional block and said prediction value to obtain a prediction error two-dimensional block;

a small block dividing circuit for calculating an activity of said two-dimensional blocks, and for using said activity as an index, dividing said prediction error two-dimensional block into either field small blocks constituted by field data or frame small blocks constituted by frame data; and

a block coding circuit for coding said divided small blocks.

Fig. 1

Fig. 2

Frame
memory

21

2

22

Address
generat.
circuit

1

Address
generat.
circuit

12

Average
calcul.
circuit

15

11

Frame
memory

Square
error
cal.cir.

13

Minimum
error
sel.circ.

14

Fig. 3

3

38

2

Inter-field
motion comp.
circuit

31

DCT
circuit

32

Quant-
izer

Inverse
quantizer

33

Motion
detect.
circuit

Inverse
DCT
circuit

34

1

Motion comp.
Inter-frame
predic.circ.

Frame
memory

35

36

Fig. 4

Fig. 5

Two dimensional blocks 16x16 : $\begin{cases} 16\times8 & \text{1st field} \\ 16\times8 & \text{2nd field} \end{cases}$

Horizontal direction

Vertical direction

1st field data (o)

2nd field data (·)

Field small block   8x8 x4

Frame small block : 8x8 x4

Fig. 6

Fig. 7

Fig. 8

Fig. 9

Time direction

Vertical
direction

CIF
Frame    t      t+1      t+2
No.

PRIOR ART

Fig.10

Time direction

Vertical
direction

x

y

z

Field
No.     1    2    1    2    1    2

Frame        t        t+1      t+2
No.

PRIOR ART

Fig.11

Data of
1st field

Data of
2nd field

1st field

2nd field

PRIOR ART

Fig.12